Europäisches Patentamt

European Patent Office

Office européen des brevets

(11) Numéro de publication : **0 422 976 B1**

(12) **FASCICULE DE BREVET EUROPEEN**

(45) Date de publication du fascicule du brevet :
25.08.93 Bulletin 93/34

(51) Int. Cl.⁵ : **G05G 5/05,** F16H 61/24,
F16F 1/12

(21) Numéro de dépôt : **90402619.2**

(22) Date de dépôt : **21.09.90**

(54) **Dispositif de rappel élastique notamment d'un doigt de commande de changement de vitesses dans une boîte de vitesses d'un véhicule automobile.**

(30) Priorité : **10.10.89 FR 8913214**

(43) Date de publication de la demande :
**17.04.91 Bulletin 91/16**

(45) Mention de la délivrance du brevet :
**25.08.93 Bulletin 93/34**

(84) Etats contractants désignés :
**DE GB IT**

(56) Documents cités :
**EP-A- 0 293 288
DE-A- 2 360 907
US-A- 4 385 754
US-A- 4 510 819**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Chrétien, Philippe
32 Rue du Professeur Guyon
F-78430 Louveciennes (FR)**

(74) Mandataire : **Durand, Yves Armand Louis et al
CABINET WEINSTEIN 20, Avenue de
Friedland
F-75008 Paris (FR)**

Jouve, 18, rue Saint-Denis, 75001 PARIS

## Description

La présente invention concerne un dispositif de rappel élastique notamment d'un doigt de commande de changement de vitesses dans une boîte de vitesses d'un véhicule automobile, comme défini dans le préambule de la revendication 1 connu du document US-A-4 510 819.

Cependant, le dispositif de rappel décrit dans le brevet US ci-dessus est difficile à démonter du fait que deux sièges de maintien des ressorts de rappel sont maintenus axialement par deux anneaux d'arrêt fixés sur l'axe de support et qu'un levier de maintien de l'un des ressorts de rappel est fixé à cet axe par une goupille.

En outre on connaît de tels dispositifs utilisés par exemple dans une boîte de vitesses classique à cinq rapports à "grille"

```
1     3     5


2     4     AR
```

où le rappel en ligne médiane, c'est-à-dire la ligne troisième-quatrième vitesses est effectué par un ressort précontraint, dont la longueur assure la précision de positionnement du doigt de commande et un ressort simple associé au ressort précontraint et plaquant le doigt de commande contre le ressort précontraint. Le ressort de positionnement est précontraint entre le doigt de commande avec éventuellement une clé d'interverrouillage et une partie fixe du carter de la boite de vitesses, le ressort précontraint étant intégré dans une cartouche par exemple soudée à la clé d'interverrouillage et réalisée par découpage et cambrage de tôle. Cependant, lorsque la clé d'interverrouillage est en fonte coulée, le soudage de la cartouche à cette clé n'est pas envisageable.

La présente invention propose un dispositif de rappel élastique d'un doigt de commande de changement de vitesses pouvant être utilisé indépendamment du type de clé d'interverrouillage ou en association directe avec le doigt de commande en l'absence de la clé d'interverrouillage et dont les constituants sont facilement assemblés avant montage sur l'axe de support du doigt de commande.

Pour cela, le dispositif de rappel élastique à une position déterminée d'une partie axialement mobile, formant notamment doigt de commande de changement de vitesses, portée par un axe, du type comprenant un ressort hélicoïdal entourant l'axe et maintenu comprimé axialement entre deux parties formant rebords extrêmes respectivement de deux pièces entourant l'axe disposées entre la partie mobile et une partie fixe et pouvant coulisser axialement l'une par rapport à l'autre entre une position de précontrainte du ressort déterminée par deux parties formant faces de butée axialement en appui l'une contre l'autre respectivement des deux pièces coulissantes et une position de compression maximale du ressort, est caractérisé en ce qu'au moins l'une des pièces coulissantes comprend une partie annulaire propre à coulisser sur l'axe et au moins trois languettes élastiques solidaires de la partie annulaire en s'étendant d'un même côté de celle-ci parallèlement à l'axe et étant réparties également autour de ce dernier, les extrémités libres des languettes comportant respectivement des saillies radiales externes définissant ensemble soit une partie formant un rebord extrême d'appui d'une extrémité du ressort, soit une partie formant face de butée et en ce que les deux pièces coulissantes peuvent s'engager axialement l'une dans l'autre de façon qu'elles fixent la position de précontrainte du ressort.

Selon une caractéristique de l'invention, les languettes ont une flexibilité radiale autorisant un déplacement centripète suffisant de leur extrémité libre pour que leurs saillies respectives de la partie formant rebord s'éclipsent lors de l'engagement du ressort sur les deux pièces coulissantes ou que leurs saillies respectives de la partie formant face de butée s'éclipsent lors de l'assemblage des deux pièces, avant montage de l'ensemble pièces coulissantes-ressort sur l'axe et en ce que les languettes, après montage de l'ensemble sur l'axe, sont radialement proches de l'axe de manière à maintenir positivement l'extrémité correspondante du ressort en appui sur leurs saillies respectives ou à maintenir leurs saillies respectives en position de butée contre la partie formant face de butée de l'autre pièce coulissante.

Selon un mode de réalisation, les deux pièces coulissantes sont identiques, les languettes élastiques de l'une des pièces sont sensiblement parallèles et de sens opposé aux languettes élastiques de l'autre pièce pour définir ainsi les deux parties formant rebords extrêmes précitées et les deux faces frontales amenées en regard l'une de l'autre respectivement des deux parties annulaires des deux pièces font office de parties formant faces de butée précitées.

Les languettes élastiques de l'une des pièces passent chacune par une partie coudée au-dessus de la partie annulaire de l'autre pièce, et vice-versa, et en dessous de chaque partie coudée d'une languette d'une pièce est prévu un épaulement venant en butée contre la face frontale de la partie annulaire de l'autre pièce, et vice-versa.

Selon une caractéristique de l'invention, dans le cas où l'axe portant la partie mobile formant doigt de commande est cannelé, les parties annulaires respectivement des deux pièces coulissantes ont un profil interne complémentaire à l'axe cannelé et les languettes de chaque pièce coulissante sont en appui au niveau de leurs faces internes opposées aux saillies radiales respectivement sur les dents de l'axe cannelé.

Selon un second mode de réalisation, l'autre pièce coulissante est en forme de manchon comportant à une extrémité un épaulement externe coopérant avec un épaulement externe de la partie annulaire de la première pièce coulissante pour former respectivement les deux parties précitées formant rebords extrêmes et une paroi transversale à l'opposé de l'épaulement externe dudit manchon, pourvue d'orifices ou évidements de passage des extrémités des languettes élastiques à l'encontre de la force de rappel du ressort de façon que les saillies radiales formant l'une des faces de butée viennent en butée sur la face intérieure de la paroi transversale formant l'autre face de butée.

Lorsque l'axe précité est cannelé, la partie annulaire de la première partie coulissante a un profil interne complémentaire à l'axe cannelé et le manchon de l'autre pièce coulissante comprend des rainures de guidage dans lesquelles s'engagent respectivement les dents de l'axe cannelé et des rainures de logement des languettes élastiques de la première pièce coulissante définissant les orifices précités de la paroi transversale et surplombant respectivement les cannelures de l'axe, les languettes élastiques étant respectivement en contact ou proches du fond des cannelures de l'axe.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels.

La figure 1 représente en coupe longitudinale un premier mode de réalisation du dispositif de rappel conforme à l'invention où l'axe de support du doigt de commande de changement de vitesses est associé à un levier de changement de vitesses.

La figure 2 est une vue agrandie de la partie cerclée en II de la figure 1.

La figure 3 est une vue semblable à celle de la figure 2 représentant le mode d'assemblage du dispositif de rappel de l'invention sur son axe de support.

La figure 4 est une vue en perspective suivant la flèche IV de la figure 2.

La figure 5 est une vue partielle en perspective d'une languette élastique du dispositif de rappel de l'invention.

La figure 6 est une vue partielle en perspective montrant l'assemblage de deux pièces du dispositif de l'invention suivant un second mode de réalisation.

La figure 7 représente en perspective un troisième mode de réalisation du dispositif conforme à l'invention.

La figure 8 est une vue en coupe longitudinale représentant le dispositif de la figure 7 en position assemblée sur son axe de support.

La figure 9 est une vue en perspective représentant un troisième mode de réalisation du dispositif de l'invention .

La figure 10 est une vue en coupe longitudinale du dispositif de la figure 9 en position assemblée sur son axe de support.

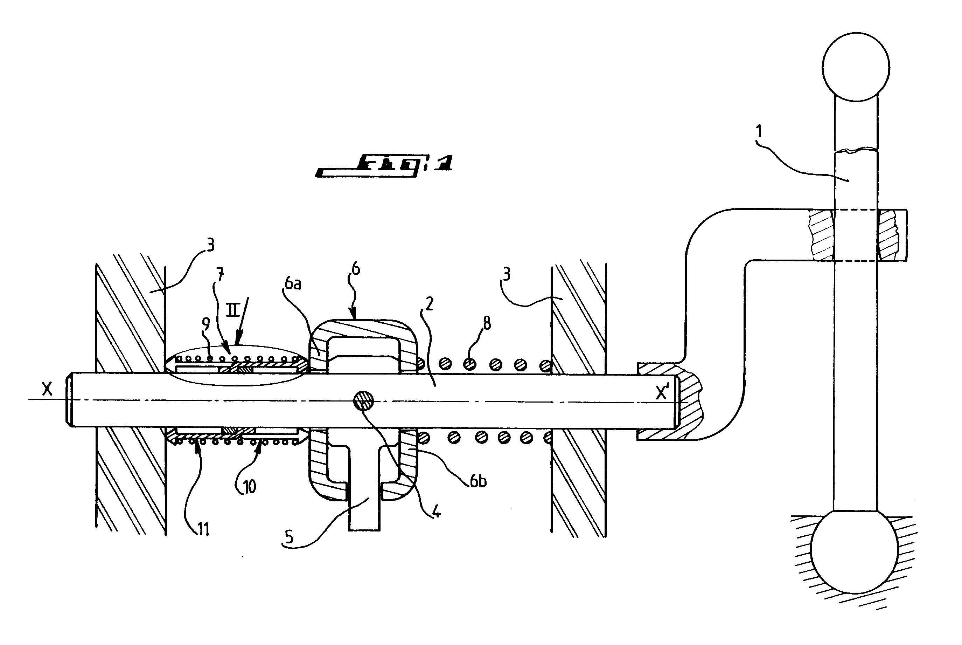

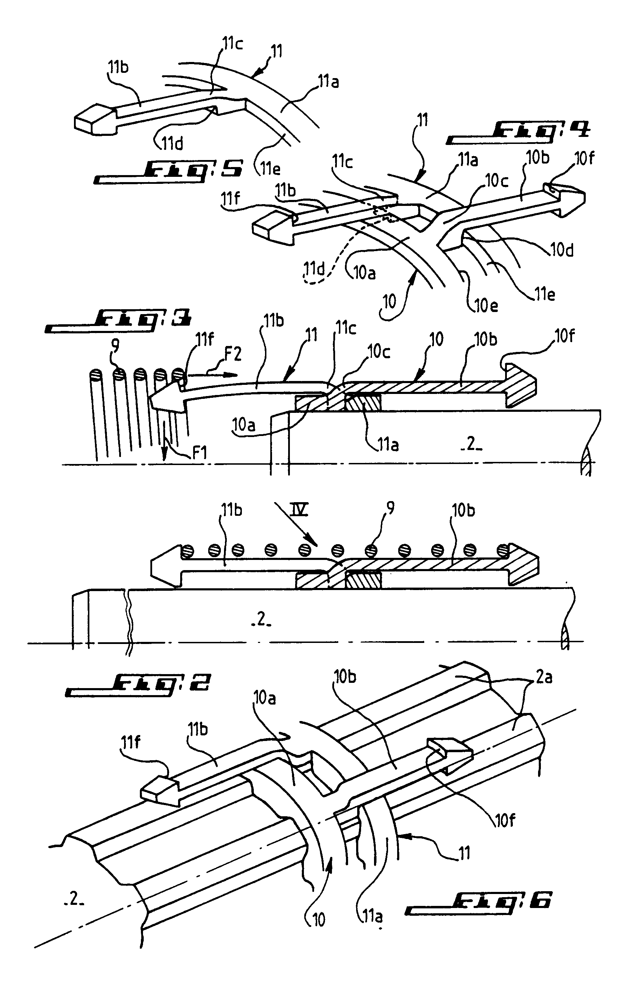

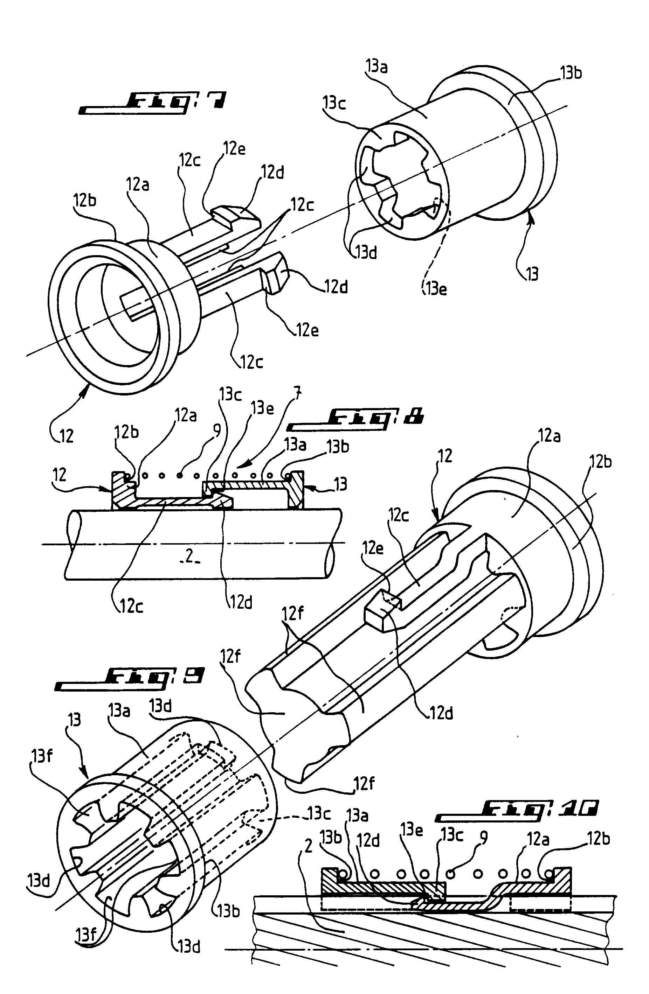

En se reportant aux figures 1 à 5, la référence 1 désigne un levier de changement de vitesses d'un véhicule automobile monté pivotant au châssis de celui-ci et accouplé à une extrémité d'un axe lisse cylindrique 2 pouvant se déplacer axialement suivant son axe X-X', sous la commande de levier 1, dans deux supports opposés parallèles 3 de paliers (non représentés) du carter d'une boîte de vitesses du véhicule, notamment du type à cinq rapports, dont la grille est par exemple celle représentée précédemment. L'axe 2 porte, solidaire de celui-ci par exemple par l'intermédiaire d'une goupille cylindrique 4, un doigt de commande 5 de changement ou de sélection de vitesses, et auquel est associée une clé d'interverrouillage 6, par exemple en fonte, à flasques latéraux 6a et 6b disposés de part et d'autre du doigt 5 et coulissant avec ce dernier. L'ensemble doigt 5-clé d'interverrouillage 6 est maintenu, comme représenté en figure 1, en une position médiane entre les deux supports 3 correspondant à la position dite de point mort du levier 1 par un dispositif 7 de rappel élastique dudit ensemble à la position médiane et logé dans la boîte de vitesses du véhicule entre le flasque 6a de la clé d'interverrouillage 6 et la paroi correspondante 3 du carter de la boîte de vitesses. Au dispositif 7 est associé un ressort 8 ayant ses deux spires extrêmes en appui respectivement sur le flasque 6b de la clé 6 et l'autre paroi 3 de la boîte de vitesses en entourant coaxialement l'axe 2.

Le dispositif 7 est constitué d'un ressort hélicoïdal 9 coaxial à l'axe 2 et maintenu précontraint axialement par deux pièces identiques 10, 11 entourant coaxialement l'axe 2 et pouvant coulisser l'une par rapport à l'autre sur cet axe entre une position de précontrainte du ressort 9 et une position de compression maximale de ce dernier. Les deux pièces 10, 11 comprennent respectivement deux parties annulaires 10a, 11a ayant chacune un diamètre interne sensiblement égal au diamètre de l'axe 2 et deux ensembles de languettes élastiques 10b, 11b, par exemple au nombre de neuf pour chaque pièce 10, 11 et solidaires respectivement des deux parties annulaires 10a, 11a. Les languettes élastiques 10b, 11b s'étendent d'un même côté de leurs parties annulaires correspondantes 10a, 11a et, en position de montage des deux pièces 10, 11 sur l'axe 2, sont disposées respectivement en sens opposé avec les parties annulaires 10a, 11a se faisant face. Plus précisément, les languettes 10b, 11b sont raccordées à leurs parties annulaires respectives 10a, 11a par l'intermédiaire d'une portion coudée 10c, 11c de façon que les languettes 10b de la pièce 10 passent au-dessus de la partie annulaire 11a de la pièce 11 tandis que les languettes 11b de la pièce 11 passent au-dessus de la partie annulaire 10a de la pièce 10. En dessous de chaque portion coudée 10c, 11c est réalisé un épaulement 10d, 11d de telle manière que les épaulements 10d, en position de montage des pièces 10, 11 sur l'axe 2, soient en appui sur la face frontale 11e de la partie annulaire 11a de la pièce 11 et que les épaulements 11d soient en appui sur la face frontale 10e de la partie annulaire 10a de la pièce 10. Les languettes 10b et 11b ont chacune leur extrémité libre en forme de tronc de pyramide dont la grande base est raccordée à la languette correspondante de manière à définir notamment une saillie radiale externe 10f, 11f perpendiculaire à la languette de façon que l'ensemble des saillies 10f constitue une face de butée d'une spire extrême du ressort précontraint 9 et que l'ensemble des saillies 11f constitue une autre face de butée de la spire extrême opposée du ressort 9, qui est ainsi monté sur les languettes élastiques 10b, 11b de manière qu'à sa position de précontrainte correspondant à la position médiane du doigt 5 les épaulements 10d soient en butée contre la face frontale 11e et que les épaulements 11d soient en butée contre la face frontale 10e. Les languettes 10b, 11b, de préférence réparties également autour de l'axe 2, ont une flexibilité radiale autorisant lors de l'assemblage des deux pièces 10, 11 l'une dans l'autre avant montage sur l'axe 2, un déplacement centripète suffisant de leurs saillies respectives 10f, 11f pour permettre le montage du ressort 9 en position de précontrainte sur les languettes 10b, 11b. Ainsi, l'assemblage du dispositif de rappel 7 s'effectue en amenant l'une vers l'autres les parties annulaires 10a, 11a de façon que les épaulements 10d, 11d viennent en butée respectivement contre les faces frontales 11e et 10e et en positionnant les parties annulaires 10a, 11a sur l'extrémité de l'axe 2 de façon que les languettes, par exemple 11b comme représenté en figure 3, soient approximativement en porte-à-faux sur l'axe 2. A cette position, les languettes 11b sont fléchies ou cintrées suivant la flèche F1 pour permettre le libre passage du ressort 9 comme indiqué par la flèche F2 vers la saillie radiale 10f. Une fois le ressort 9 en position de précontrainte entre les saillies radiales 10f et 11f, l'ensemble ressort 9-pièces 10, 11 est amené en butée contre le flasque 6a de la clé 6 et l'axe 2 est ensuite monté dans le support 3 de façon que les extrémités en tronc de pyramide des languettes 11b viennent en appui contre la face interne du support 3. Les extrémités en tronc de pyramide des languettes 10b, 11b sont suffisamment proches du pourtour de l'axe 2 de manière à maintenir positivement les spires extrêmes du ressort 9 en appui sur les saillies radiales 10f et 11f. Bien entendu, l'assemblage des pièces 9, 10 et 11 peut s'effectuer avant montage sur l'axe 2.

Lorsque l'on amène le levier 1 par exemple à une position correspondant à la sélection des première et deuxième vitesses, l'axe 2, ainsi que l'ensemble doigt 5-clé 6 se déplacent axialement vers la gauche par rapport à la figure 1 en faisant coulisser l'une vers l'autre les deux pièces 10 et 11 à une position de compression maximale du ressort précontraint 9. Le rappel en ligne médiane de troisième-quatrième vitesses est ensuite assuré par le dispositif de rappel élastique 7.

La figure 6 représente le montage des deux pièces coulissantes ci-dessus 10, 11 à languettes 10b, 11b sur l'axe 2 qui est cannelé dans le cas où le dispositif 7 s'appuie directement sur le doigt 5 qui tourne avec l'axe 2 pour un changement de vitesses et non plus sur la clé d'interverrouillage 6, non rotative. Dans ce cas, les parties annulaires 10a, 11a respectivement des deux pièces coulissantes 10, 11 ont un profil interne complémentaire de l'axe cannelé 2 et les languettes élastiques 10b, 11b de chaque pièce sont en appui par leurs faces internes opposées aux saillies radiales 10f, 11f respectivement sur les dents longilignes 2a de l'axe cannelé 2.

Le dispositif de rappel élastique 7 du mode de réalisation tel que représenté aux figures 7 et 8 comprend également deux pièces coulissantes 12, 13 où la pièce coulissante 12 est comparable à l'une des deux pièces 10, 11 décrites précédemment. Ainsi, la pièce 12 est constituée d'une partie annulaire 12a d'un diamètre interne légèrement supérieur au diamètre de l'axe 2 et comportant un épaulement extrême externe 12b formant face de butée d'une spire extrême du ressort précontraint 9, et plusieurs languettes élastiques 12c, dans le cas présent au nombre de quatre, solidaires de la partie annulaire 12a en s'étendant d'un même côté de celle-ci de façon à être également réparties autour de l'axe 2 en position de montage du dispositif 7. Les languettes élastiques 12c se terminent chacune par une partie formant talon 12d à face radiale externe 12e de raccordement avec la languette correspondante 12c perpendiculaire à cette dernière. L'ensemble des faces ou saillies radiales 12e forment face de butée coopérant avec une face de butée correspondante de l'autre pièce coulissante 13 pour déterminer la longueur de précontrainte du ressort 9. Comme les languettes 10b, 11b, les languettes 12c ont une flexibilité radiale autorisant un déplacement centripète suffisant des parties formant talon 12d de façon à permettre l'assemblage de la pièce 12 à la pièce 13 comme cela sera décrit ultérieurement. La pièce coulissante 13 est généralement en forme de manchon 13a comportant un épaulement extrême externe 13b servant de butée à la spire extrême du ressort 9 opposée à celle en appui sur l'épaulement 12b et une paroi extrême 13c située à l'opposé de l'épaulement 13b et pourvue d'orifices ou évidements en forme de rainures 13d, au nombre de quatre, et permettant le passage des parties formant talon. La face intérieure ou arrière 13e constitue la face de butée citée précédemment comme coopérant avec la face de butée et formée par les saillies radiales 12e.

L'assemblage des deux pièces coulissantes 12, 13 peut s'effectuer avant leur montage sur l'axe 2 en positionnant tout d'abord le ressort 9 coaxialement autour du manchon 13a en butée contre l'épaulement 13b et introduisant ensuite dans le ressort 9 les languettes élastiques 12c et la partie annulaire 12a de la pièce 12 à l'encontre de la force de rappel du ressort 9 également en appui contre l'épaulement 12b. Les saillies radiales 12e s'engagent élastiquement respectivement dans les évidements 13d jusqu'à ce qu'elles viennent en appui contre la face de butée 13e. Les deux pièces 12, 13 ainsi assemblées sont alors enfilées sur l'axe 2, les extrémités des languettes 12c, par leur face en dessous des parties formant talon 12d étant suffisament proches de l'axe 2 de façon à maintenir positivement les faces de butée 12e et 13e en appui l'une contre l'autre. De préférence, les extrémités des languettes 12c sont en appui sur l'axe 2. Le dispositif 7 de ce mode de réalisation fonctionne de la même manière que celui décrit précédemment en référence notamment à la figure 1.

Les pièces coulissantes du dispositif 7 représenté aux figures 9 et 10 sont comparables à celles décrites en référence aux figures 7 et 8. Ainsi, la pièce 12 comporte quatre languettes élastiques 12c, dont une seule est représentée, comportant à leurs extrémités libres une partie formant talon 12d et raccordées à une partie annulaire 12a comportant à sa partie extrême un épaulement 12b formant face de butée au ressort 9. Cependant, dans la mesure où l'arbre 2 est cannelé, la partie annulaire 12a a un profil interne complémentaire de l'axe 2. La pièce coulissante 13 comporte le manchon 13a ayant l'épaulement extrême 13b formant face de butée au ressort 9 et la paroi transversale 13c pourvue des évidements 13d pour le passage des parties formant talon 12d de la pièce 12. Les évidements 13d sont constitués par des rainures réalisées le long de la pièce 13 de façon à loger les languettes 12c avec bien entendu les faces radiales 12e formant face de butée coopérant avec la face arrière ou intérieure 13e formant face de butée pour déterminer la précontrainte du ressort 9. Les rainures 13e surplombent respectivement les cannelures de l'axe 2 pour loger les languettes 12c et la pièce 13 comporte de plus des rainures de guidage 13f dans lesquelles s'engagent respectivement les dents longilignes 12f de l'axe 2. En position de montage des pièces 12, 13 sur l'axe 2, les languettes 12c sont à proximité respectivement des fonds des cannelures et, de préférence, sont en appui sur ceux-ci. L'assemblage de la pièce 12 à la pièce 13 avant montage sur l'axe 2 s'effectue en positionnant le ressort 9 sur le manchon 13a de manière qu'il soit en appui contre l'épaulement 13b et en introduisant dans le ressort 9 les languettes 12c et la partie annulaire 12a, dont l'épaulement 12b vient en butée contre la spire extrême correspondante du ressort 9. Les parties formant talons 12d traversent les évidements 13d jusqu'à ce que les faces radiales 12e viennent en butée contre la surface intérieure 13e sous l'action de rappel du ressort 9 qui se trouve ainsi précontraint à la valeur souhaitée. L'ensemble ainsi constitué est ensuite disposé sur l'axe 2 comme représenté en figure 10. Un déplacement axial du doigt 5 associé au dispositif 7 provoque le coulissement de la pièce 12 relativement à la pièce 13 de façon que les languettes 12c se déplacement de façon guidée dans leurs rainures de logement 13d jusqu'à ce que le ressort 9 soit comprimé à une valeur maximale.

Avantageusement, les pièces coulissantes des différents modes de réalisation décrits ci-dessus sont réalisées simplement par moulage d'une matière plastique. De plus, le dispositif 7 de chaque mode de réalisation est facilement démontable et peut intégrer les butées de sélection.

## Revendications

1. Dispositif de rappel élastique à une position déterminée d'une partie axialement mobile (5) portée par un axe (2), du type comprenant un ressort hélicoïdal (9) entourant l'axe (2) et maintenu comprimé axialement entre deux parties formant rebords extrêmes (10f, 11f ; 12b, 13b) respectivement de deux pièces (10, 11 ; 12, 13) entourant l'axe (2) disposées entre la partie mobile (5) et une partie fixe (3) et pouvant coulisser axialement l'une par rapport à l'autre entre une position de précontrainte du ressort (9) déterminée par deux parties formant faces de butée (10d, 11e, 11d, 10e ; 12e, 13e) axialement en appui l'une contre l'autre respectivement des deux pièces coulissantes et une position de compression maximale du ressort (9), caractérisé en ce qu'au moins l'une (10, 11 ; 12) des pièces coulissantes comprend une partie annulaire (10a, 11a ; 12a) propre à coulisser sur l'axe (2) et au moins trois languettes élastiques (10b, 11b ; 12c) solidaires de la partie annulaire en s'étendant d'un même côté de celle-ci parallèlement à l'axe (2) et étant réparties également autour de ce dernier, les extrémités libres des languettes (10b, 11b ; 12c) comportant respectivement des saillies radiales externes (10f, 11f ; 12e) définissant ensemble soit une partie formant un rebord extrême (10f, 11f) d'appui d'une extrémité du ressort (9), soit une partie formant face de butée (12e) et en ce que les deux pieces (10,11;12,13) coulissantes peuvent s'engager axialement l'une dans l'autre de façon qu'elles fixent la position de précontrainte du ressort (9).

2. Dispositif selon la revendication 1, caractérisé en ce que les languettes précitées ont une flexibilité radiale autorisant un déplacement centripète suffisant de leur extrémité libre pour que leurs saillies respectives (10f, 11f) de la partie formant rebord précité s'éclipsent lors de l'engagement du ressort (9) sur les deux pièces (10, 11) précitées ou que leurs saillies respectives (12e) de la partie formant face de butée s'éclipsent lors de l'assemblage des deux pièces (12, 13), avant montage de l'ensemble pièces coulissantes (10, 11 ; 12, 13)-ressort (9) sur l'axe (2) et en ce que les languettes, après montage dudit ensemble sur l'axe (2), sont radialement proches de l'axe (2) de manière à maintenir positivement l'extrémité correspondante du ressort (9) en appui sur leurs saillies respectives (10f, 11f) ou à maintenir leurs saillies respectives (12e) en position de butée contre la partie formant face de butée (13e) de l'autre pièce coulissante (13).

3. Dispositif selon la revendication 1 ou 2, caractérisé en ce que la seconde pièce coulissante (10 ; 11) est identique à la première pièce coulissante (11 ; 10), les languettes élastiques (10b) de l'une des pièces (10) sont parallèles et de sens opposé aux languettes élastiques (11b) de l'autre pièce (11) pour définir ainsi les deux parties formant rebords extrêmes (10f, 11f) précitées et en ce que les deux faces frontales (10e, 11e) amenées en regard l'une de l'autre respectivement des deux parties annulaires (10a, 11a) des deux pièces font office de parties formant faces de butées précitées.

4. Dispositif selon la revendication 3, caractérisé en ce que les languettes élastiques (10b ; 11b) de l'une des pièces (10 ; 11) passent chacune par une partie coudée (10c ; 11c) au-dessus de la partie annulaire (11c, 10c) de l'autre pièce (11 ; 10), et vice-versa, et en ce qu'en dessous de chaque partie coudée (10c ; 11c) d'une languette (10b, 11b) d'une pièce (10, 11) est prévu un épaulement (10d, 11d) venant en butée contre la face frontale (11e, 10e) de l'autre pièce, et vice-versa.

5. Dispositif selon l'une des revendications précédentes, caractérisé en ce que, dans le cas où l'axe (2) précité est cannelé, les parties annulaires (10a, 11a) respectivement des deux pièces coulissantes (10, 11) ont chacune un profil interne complémentaire de l'axe cannelé et les languettes (10b, 11b) de chaque pièce coulissante (10, 11) sont en appui au niveau de leurs faces internes opposées aux saillies radiales (10f, 11f) respectivement sur les dents (2a) de l'axe cannelé (2).

6. Dispositif selon la revendication 1 ou 2, caractérisé en ce que l'autre pièce coulissante (13) est en forme de manchon (13a) comportant à une extrémité un épaulement externe (13b) coopérant avec un épaulement externe (12b) de la partie annulaire (12e) de la première pièce coulissante (12) précitée pour former respectivement les deux parties précitées formant rebords extrêmes et une paroi transversale (13c) à l'opposé de l'épaulement externe (13b) dudit manchon, pourvue d'orifices ou évidements (13d) de passage des extrémités des languettes élastiques (12c) à l'encontre de la force de rappel du ressort (9) de façon que les saillies radiales (12e) formant l'une des faces de butée viennent en appui sur la face intérieure (13e) de la paroi transversale (13c) formant l'autre face de butée.

7. Dispositif selon la revendication 6, caractérisé en ce que dans le cas où l'axe (2) précité est cannelé, la partie annulaire (12a) de la première partie coulissante (12) a un profil interne complémentaire de l'axe cannelé (2) et le manchon (13a) de l'autre pièce coulissante (13) comprend des rainures de guidage (13f) dans lesquelles s'engagent respectivement les dents (12f) de l'axe cannelé (2) et des rainures de logement (13d) des languettes élastiques (12c) de la première pièce coulissante (12) définissant les orifices précités de la paroi transversale (13c) et surplombant respectivement les cannelures de l'axe cannelé (2), les languettes élastiques (12c) étant respectivement en contact ou proches du fond des cannelures de l'axe (2).

8. Dispositif selon l'une des revendications précédentes, caractérisé en ce que la partie axialement mobile (5) précitée est constituée par un doigt de commande (5) de changement ou de sélection de vitesses dans une boîte de vitesses d'un véhicule automobile, lequel doigt est maintenu à la position déterminée précitée par un autre ressort (8) entourant coaxialement l'axe (2) et disposé entre le doigt (5) et une partie fixe (3) opposée à la partie fixe (3) précitée de façon à plaquer le doigt de commande (5) contre le dispositif de rappel (7).

9. Dispositif selon l'une des revendications précédentes, caractérisé en ce que les pièces coulissantes précitées sont réalisées en une matière plastique moulée.

**Patentansprüche**

1. Vorrichtung zur elastischen Rückstellung eines durch eine Spindel (2) getragenen axial bewegbaren Teiles (5) in eine bestimmte Stellung, derjenigen Gattung, mit einer die Spindel (2) umgebenden Wendelfeder (9), die zwischen zwei Endrandleisten (10f, 11f ; 12b, 13b) jeweils von zwei die Spindel (2) umgebenden und zwischen dem bewegbaren Teil (5) und einem ortsfesten Teil (3) angeordneten Stücken (10, 11 ; 12, 13) axial zusammengedrückt gehalten wird, wobei diese Stücke zwischen einer durch zwei Anschlagflächen bildende, sich axial aneinander abstützenden Teile (10d, 11e, 11d, 10e ; 12e, 13e) jeweils der beiden gleitbaren Stücke bestimmten Stellung zur Vorspannung der Feder (9) und einer Stellung zum maximalen Zusammendrücken der Feder (9) axial in Bezug aufeinander gleitbar sind, dadurch gekennzeichnet, dass wenigstens eines (10, 11 ; 12) der gleitbaren Stücke einen auf der Spindel (2) gleitbaren ringförmigen Teil (10a, 11a ; 12a) und wenigstens drei mit dem ringförmigen Teil fest verbundene und sich auf derselben Seite des letzteren parallel zur Spindel (2) erstreckende und gleichmässig um diese letztere verteilte elastische Zungen (10b, 11b ; 12c) umfasst, wobei die freien Enden der Zungen (10b, 11b ; 12c) jeweils äussere radiale Vorsprünge (10f, 11f ; 12e) aufweisen, die zusammen entweder einen sich an einem Ende der Feder (9) abstützenden, eine Endrandleiste bildenden Teil (10f, 11f) oder einen eine Anschlagfläche bildenden Teil (12e) abgrenzen und dass die beiden gleitbaren Stücke (10, 11 ; 12, 13) sich derart axial ineinander fügen können, dass sie die Stellung der Vorspannung der Feder (9) festlegen.

2. Vorrichtung nach Anspruch 1, dadurch gekennzeichnet, dass die vorgenannten Zungen eine radiale Biegsamkeit haben, welche eine ausreichende zentripetale Verschiebung deren freien Endes gestatten, damit deren jeweiligen Vorsprünge (10f, 11f) des vorgenannten eine Randleiste bildenden Teiles sich zurückziehen, während des Angreifens der Feder (9) an den beiden vorgenannten Stücken (10, 11) oder damit deren jeweiligen Vorsprünge (12e) des eine Anschlagfläche bildenden Teiles sich während dem Zusammenfügen der beiden Stücke (12, 13) vor der Anordnung der aus dem gleitbaren Stücken (10, 11 ; 12, 13) und der Feder (9) bestehenden Gesamtheit an der Spindel (2) zurückziehen und dass die Zungen, nach Anordnung der besagten Gesamtheit an der Spindel (2) radial nahe der Spindel (2) sind, um das entsprechende Ende der Feder (9) positiv in Abstützung an deren jeweiligen Vorsprüngen (10f, 11f) zu halten oder deren jeweiligen Vorsprünge (12e) in Anschlagsstellung gegen den eine Anschlagfläche bildenden Teil (13e) des anderen Stückes (13) zu halten.

3. Vorrichtung nach Anspruch 1 oder 2, dadurch gekennzeichnet, dass das zweite gleitbare Stück (10 ; 11) identisch mit dem ersten gleitbaren Stück (11 ; 10) ist, die elastischen Zungen (10b) des einen (10) der Stücke parallel und entgegengesetzter Richtung zu den elastischen Zungen (11b) des anderen Stückes (11) sind, um somit die beiden vorgenannten Endrandleisten bildenden Teile (10f, 11f) abzugrenzen und dass die beiden einander gegenüber gebrachten Stirnflächen (10e, 11e) jeweils der beiden ringförmigen Teile (10a, 11a) der beiden Stücke die Funktion der vorgenannten Anschlagflächen bildenden Teile erfüllen.

4. Vorrichtung nach Anspruch 3, dadurch gekennzeichnet, dass die elastischen Zungen (10b ; 11b) des einen der Stücke (10 ; 11) jeweils durch einen gekrümmten Teil (10c ; 11c) oberhalb des ringförmigen Teiles (11c, 10c) des anderen Stückes (11 ; 10) führen und umgekehrt und dass unterhalb jedes gekrümmten Teiles (10c, 11c) einer Zunge (10b, 11b) eines Stückes (10, 11) eine in Anschlag gegen die Stirnfläche (11e, 10e) des anderen Stückes kommende Schulter (10d, 11d) und umgekehrt vorgesehen ist.

5. Vorrichtung nach einem der vorangehenden Ansprüche, dadurch gekennzeichnet, dass, in dem Fall wo die vorgenannte Spindel (2) geriffelt ist, die ringförmigen Teile (10a, 11a) jeweils der beiden gleitbaren Stücke (10, 11) jede ein der geriffelten Spindel formschlüssig entsprechendes Profil haben und die Zungen (10b, 11b) jedes Gleitstückes (10, 11) sich in Höhe deren den radialen Vorsprüngen (10f, 11f) entgegengesetzten inneren Flächen jeweils an den Zähnen (a) der geriffelten Spindel (2) abstützen.

6. Vorrichtung nach Anspruch 1 oder 2, dadurch gekennzeichnet, dass das andere gleitende Stück (13) die Gestalt einer Muffe (13a) hat, welche an einem Ende eine mit einer äusseren Schulter (12b) des ringförmigen Teiles (12e) des vorgenannten ersten gleitbaren Stückes (12) zusammenwirkende äussere Schulter (13b) aufweist, um jeweils die vorgenannten beiden Endrandleisten bildenden Teile und eine der äusseren Schulter (13b) der besagten Muffe entgegengesetzte Querwand (13c) zu bilden, die mit Offnungen bzw. Aussparungen (13d) zur Durchführung der Enden der elastischen Zungen (12c) entgegen der Rückstellkraft der Feder (9) versehen sind, so dass die die eine der Anschlagflächen bildenden radialen Vorsprünge (12e) zur Abstützung an der innere Fläche (13e) der die andere Anschlagfläche bildenden Querwand (13c) kommen.

7. Vorrichtung nach Anspruch 6, dadurch gekennzeichnet, dass, in dem Fall wo die vorgenannte Spindel (2) geriffelt ist, der ringförmige Teil (12a) des ersten gleitbaren Stückes (12) ein der geriffelten Spindel (2) formschlüssig entsprechendes inneres Profil hat und die Muffe (13a) des anderen gleitbaren Stückes (13) Führungsnuten (13f), in welche jeweils die Zähne (12f) der geriffelten Spindel (2) eingreifen und Nuten (13d) zur Aufnahme der elastischen Zungen (12c) des ersten gleitbaren Stückes (12) aufweist, welche die vorgenannten Offnungen der Querwand (13c) abgrenzen und jeweils die Riffelungen der geriffelten Spindel (2) überhängen, wobei die elastischen Zungen (12c) jeweils in Berührung mit oder nahe dem Boden der Riffelungen der Spindel (2) sind.

8. Vorrichtung nach einem der vorangehenden Ansprüche, dadurch gekennzeichnet, dass der vorgenannte axial bewegliche Teil (5) durch einen Schaltfinger (5) zur Änderung bzw. Auswahl von Geschwindigkeiten in einem Getriebe eines Kraftfahrzeugs gebildet wird, welcher Finger in der vorgenannten bestimmten Stellung durch eine andere die Spindel (2) koaxial umgebende und zwischen dem Finger (5) und einem dem vorgenannten ortsfesten Teil (3) entgegengesetzten ortsfesten Teil angeordnete Feder gehalten wird, um den Schaltfinger (5) gegen die Rückstellvorrichtung (7) zu drücken.

9. Vorrichtung nach einem der vorangehenden Ansprüche, dadurch gekennzeichnet, dass die vorgenannten gleitbaren Stücke aus einem formgegossenen Kunststoff hergestellt sind.

**Claims**

1. Device for elastically returning an axially movable part (5) carried by a shaft (2) to a determined position, of the type comprising a helical spring (9) surrounding the shaft (2) and kept axially compressed between two portions forming end ledges (10f, 11f; 12b, 13b), respectively, of two pieces (10, 11 ; 12, 13) surrounding the shaft (2), disposed between the movable part (5) and a stationary part (3) and capable of sliding axially with respect to each other between a position for prestressing the spring (9), determined by two portions forming stop faces (10d, 11e, 11d, 10e ; 12e, 13e) axially bearing upon each other, respectively, of both sliding pieces and a position of maximum compression of the spring (9), characterized in that at least one (10, 11 ; 12) of the sliding pieces comprises an annular portion (10a, 11a ; 12a) appropriate for sliding on the shaft (2) and at least three elastic tongues (10b, 11b ; 12c) made fast to the annular portion and extending on a same side thereof in parallel relation to the shaft (2) and being equally distributed about the latter, the free ends of the tongues (10b, 11b ; 12c) comprising external radial projections (10f, 11f; 12e) together defining either a portion forming an end ledge (10f, 11f) for the bearing of one end of the spring (9) or a portion forming a stop face (12e) and in that both sliding pieces (10, 11 ; 12, 13) may axially fit into each other so that they are setting the position of prestressing of the spring (9).

2. Device according to claim 1, characterized in that the aforesaid tongues have a radial flexibility allowing a sufficient centripetal displacement of their free end in order that their respective projections (10f, 11f) of the aforesaid ledge-forming portion retract upon the engagement of the spring (9) with both aforesaid pieces (10, 11) or that their respective projections (12e) of the portion forming a stop face retract upon the assembly of both pieces (12, 13) before the mounting of the slidable pieces (10, 11 ; 12, 13)-spring (9) unit on the shaft (2) and in that the tongues after mounting of the said unit onto the shaft (2) are radially near the shaft (2) so as to positively keep the corresponding end of the spring (9) bearing upon the respective projections (10f, 11f) or to hold their respective projections (12e) in an abutment position against the portion forming a stop face (13f) of the other sliding piece (13).

3. Device according to claim 1 or 2, characterized in that the second sliding piece (10 ; 11) is identical with the first sliding piece (11 ; 10), the elastic tongues (10b) of one (10) of the pieces are parallel and of a direction opposite to the elastic tongues (11b) of the other piece (11) to thus define the aforesaid two portions forming end ledges (10f, 11f) and in that both front faces (10e, 11e), brought in front of each other, respectively, of both annular portions (10a, 11a) of both pieces are acting as the aforesaid portions forming stop faces.

4. Device according to claim 3, characterized in that the elastic tongues (10b ; 11b) of one of the pieces (10 ; 11) are passing each one through a bent portion (10c ; 11c) above the annular portion (11c, 10c) of the other piece (11 ; 10) and viceversa and in that below each bent portion (10c ;

11c) of one tongue (10b, 11b) of one piece (10, 11) is provided a shoulder (10d, 11d) coming in abutment against the front face (11e, 10e) of the other piece and vice-versa.

5. Device according to one of the foregoing claims, characterized in that in the case where the aforesaid shaft (2) is splined, the annular portions (10a, 11a) of both sliding pieces (10, 11), respectively, have each one an internal profile complementary of the splined shaft and the tongues (10b, 11b) of each sliding piece (10, 11) are bearing at the level of their internal faces opposite to the radial projections (10f, 11f), respectively, upon the teeth (2a) of the splined shaft (2).

6. Device according to claim 1 or 2, characterized in that the other sliding piece (13) is in the shape of a sleeve (13a) comprising at one end an external shoulder (13b) co-operating with an external shoulder (12b) of the annular portion (12e) of the aforesaid first sliding piece (12) to respectively form both aforesaid portions forming end ledges and a transverse wall (13c) on the opposite side of the external shoulder (13b) of the said sleeve, provided with apertures or recesses (13d) for the passage of the ends of the elastic tongues (12c) against the return force of the spring (9) so that the radial projections (12e) forming one of the stop faces are caused to bear upon the inner face (13e) of the transverse wall (13c) forming the other stop face.

7. Device according to claim 6, characterized in that in the case where the aforesaid shaft (2) is splined, the annular portion (12a) of the first sliding portion (12) has an internal profile complementary of the splined axis (2) and the sleeve (13a) of the other sliding piece (13) comprises guide grooves (13f) into which the teeth (12f) of the splined shaft (2) are inserted, respectively, and grooves (13d) for the accommodation of the elastic tongues (12c) of the first sliding piece (12) defining the aforesaid apertures of the transverse wall (13c) and overhanging the splines, respectively, of the splined shaft (2), the elastic tongues (12c) being in contact with or close to the bottom of the splines, respectively, of the shaft (2).

8. Device according to one of the foregoing claims, characterized in that the aforesaid axially movable part (5) is constituted by a finger (5) for the control of the change or selection of speeds in a gear box of an automotive vehicle, which finger is held in the aforesaid determined position by another spring (8) coaxially surrounding the shaft (2) and disposed between the finger (5) and a stationary portion (3) opposite to the aforesaid stationary part (3) so as to tightly apply the control finger (5) upon the return device (7).

9. Device according to one of the foregoing claims, characterized in that the aforesaid sliding pieces are made from a molded plastics material.

Fig.1

Fig. 4

Fig. 5

Fig. 3

Fig. 2

Fig. 6

_Fig 7_

_Fig 8_

_Fig 9_

_Fig 10_